# EUROPÄISCHE PATENTANMELDUNG

(11) **EP 4 508 961 A1**
(43) Veröffentlichungstag der Anmeldung: **19.02.2025**
(21) Anmeldenummer: 24183346.6
(22) Anmeldetag: 20.06.2024
(51) Int. Cl.: A01B 69/04, A01B 79/00, A01F 15/08

(54) **ASSISTENZSYSTEM FÜR EIN LANDWIRTSCHAFTLICHES GESPANN**

(30) Priorität: 15.08.2023 DE 102023121739
(71) Anmelder: Usines CLAAS France S.A.S, 57140 St. Rémy / Woippy (FR)
(72) Erfinder: Fuchs, Volker, 54439 Saarburg (DE); Batancourt, Grégory, 57130 Vionville (FR); Bistritz, Philipp, 78224 Singen (DE); Bonhomme, Thierry, 57730 Macheren (FR); Dommange, Pierre, 57160 Scy-Chazelles (FR); Fischer, Josef, 88400 Biberach (DE); Henselmeyer, Hendrik, 49214 Bad Rothenfelde (DE); Obellianne, Steve, 57530 Courcelles-Chaussy (FR); Risse, Nicolas, 57645 Retonfey (FR); Rongvaux, Laurent, 54800 Tronville (FR); Wieckhorst, Jan Carsten, 29525 Uelzen Orsteil Hanstedt 2 (DE)
(74) Vertreter: CLAAS 365FarmNet GmbH

(57) **Zusammenfassung**

Die vorliegende Offenlegungsschrift betrifft ein Assistenzsystem (12) für ein landwirtschaftliches Gespann (1), wobei das Gespann (1) eine landwirtschaftliche Zugmaschine (2) und eine an die Zugmaschine (2) adaptierte landwirtschaftlichen Ballenpresse (4) umfasst. Das Assistenzsystem (12) ist dazu vorgesehen und eingerichtet, zumindest einen Betriebsparameter (B_{M}) zumindest einer Maschinenanordnung (13) aus zumindest einem dem Ballenpressvorgang (5.1) vorgelagerten Prozessschritt (5) abzurufen, den zumindest einen Betriebsparameter (B_{M}) der zumindest einen Maschinenanordnung (13) in einer Analyseroutine derart zu verarbeiten, dass zumindest ein Betriebsparameter (B_{G}) für das Gespann (1) für die Durchführung des Ballenpressvorgangs (5.1) ermittelt wird und zumindest ein Arbeitsaggregat (7, 8) der Zugmaschine (2) und/oder der Ballenpresse (4) zur Einstellung des zumindest einen Betriebsparameters (B_{G}) für das Gespann (1) anzusteuern.

## Beschreibung

Die vorliegende Erfindung betrifft ein Assistenzsystem für ein landwirtschaftliches Gespann umfassend eine landwirtschaftliche Zugmaschine und eine an die Zugmaschine adaptierte landwirtschaftliche Ballenpresse gemäß dem Oberbegriff des unabhängigen Patentanspruchs 1 sowie ein solches landwirtschaftliches Gespann mit einem solchen Assistenzsystem gemäß dem unabhängigen Patentanspruch 16.

Ein Ernteprozess zeichnet sich durch verschiedene Prozessschritte aus, die abhängig vom Erntegut sowie von Umgebungsbedingungen und den Zielsetzungen des Ernteprozesses variieren können. Übliche Prozessschritte eines Ernteprozesses auf einem Feld sind beispielsweise ein Mähen, ein Wenden, ein Schwaden, eine Schwadernte mittels eines Gespanns aus einer landwirtschaftlichen Zugmaschine und einer daran adaptierten landwirtschaftlichen Ballenpresse sowie ein Abtransport der geformten bzw. gepressten Ballen. Die einzelnen Prozessschritte folgen dabei bedarfsweise, beispielsweise abhängig von der Art des Ernteguts, von Umgebungsbedingungen und/oder einer Zielsetzung des Ernteprozesses, aufeinander. Die Summe der jeweils aufeinanderfolgenden Prozessschritte eines spezifischen Ernteprozesses wird auch als Ernteprozesskette bezeichnet.

Abhängig von der Zielsetzung mit der ein solcher Ernteprozess durchgeführt wird, wird als Ergebnis bzw. Produkt der Abfolge von Prozessschritten beispielsweise Futtermittel oder Biomasse für eine Biogasanlage erhalten. In aller Regel stellt die Qualität der Produkte des Ernteprozesses, beispielsweise in Form der Energiedichte, eine wesentliche Größe dar, die abhängig ist von den verschiedenen durchgeführten Prozessschritten, der dort eingesetzten landwirtschaftlichen Ernte-/Arbeitsmaschinen sowie deren Maschineneinstellungen.

Insbesondere bei einer Schwadernte mittels eine eines Gespanns aus einer landwirtschaftlichen Zugmaschine und einer daran adaptierten landwirtschaftlichen Ballenpresse, auch als Prozessschritt "Ballenpressvorgang" bezeichnet, gibt es eine Vielzahl von Parametern des Gespanns, also der Zugmaschine und/oder der Ballenpresse, die es einzustellen gilt. Die Einstellung dieser Parameter beeinflusst maßgeblich das in Form von Ballen erhaltene Produkt, sodass die Parameter, die am Gespann eingestellt werden, mit Bedacht gewählt werden müssen. Wesentlich für den Ballenpressvorgang, insebsondere für die spezifischen Parametereinstellungen, sind dabei Informationen über das zu erntende Erntegut, welches auf dem Feld in Form von Schwaden abgelegt ist, und/oder Informationen zu den vorliegenden Umweltbedingungen. Erfahrene Bediener sind in der Lage die Parameter des Gespanns anhand solcher Informationen selbsttätig zu bestimmen und einzustellen, sodass Produkte von gewünschter Qualität nach Abschluss der Prozessschritte erhalten werden. Weniger erfahrene Bediener haben allerdings Schwierigkeiten stets die geeigneten Parameter trotz vorhandener Informationen einzustellen.

Abgesehen hiervon ist ein gewisser Aufwand zu betreiben, um überhaupt Informationen über das zu erntende Erntegut und/oder den vorliegenden Umweltbedingungen zu ermitteln. Insbesondere die Bestimmung von Informationen zu dem auf dem Feld abgelegten Erntegut bedarf zusätzlicher Systeme. So ist es bekannt Feldsensorsysteme zu verwenden, die in der Lage sind, Eigenschaften, wie beispielsweise eine Feuchtigkeit bzw. einen Trockengrad des im Schwad abgelegten Ernteguts, eine Verteilung des Schwads oder dergleichen, zu bestimmen und diese georeferenziert abzuspeichern.

Die EP 3 314 997 A1 beschreibt in diesem Zusammenhang beispielsweise mittels eines oder mehrerer Feldsensoren eine Information zum Feuchtegehalt des auf dem Feld während des Prozessschrittes Mähen abgelegten Ernteguts zu bestimmen und diese Größe für die Vorgabe von Parametern nachfolgender Prozessschritte bzw. für in solchen Prozessschritten verwendete Maschinenanordnungen zu nutzen.

Oftmals sind derartige Sensorsysteme am Feld für die Bestimmung von Erntegutparametern allerdings nicht vorhanden, da eine Anschaffung mit erheblichen Kosten einhergeht und Felder, die mit derartigen Sensorsystemen versehen sind, gesichert oder überwacht werden müssen.

Ausgehend hiervon ist es demnach die Aufgabe der vorliegenden Erfindung die beschriebenen Nachteile auszuräumen und insbesondere ein Assistenzsystem derart auszugestalten und weiterzubilden, dass ein Bediener bei der Einstellung eines landwirtschaftlichen Gespanns aus einer landwirtschaftlichen Zugmaschine und einer daran adaptierten landwirtschaftlichen Ballenpresse für die Durchführung eines Ballenpressvorgangs unterstützt wird, ohne dass Informationen zum Erntegut auf dem Feld, welches mittels des Gespanns zu Ballen gepresst werden soll, vorliegen.

Diese Aufgabe wird erfindungsgemäß durch die Merkmale des unabhängigen Patentanspruchs 1 gelöst, wobei vorteilhafte Weiterbildungen des erfindungsgemäßen Assistenzsystems Gegenstand der entsprechenden abhängigen Patentansprüche 2 bis 15 sind.

Demnach betrifft die vorliegende Erfindung ein Assistenzsystem für ein landwirtschaftliches Gespann. Das Gespann umfasst eine landwirtschaftliche Zugmaschine, insbesondere einen Traktor, und eine an die Zugmaschine adaptierte landwirtschaftliche Ballenpresse, wobei die Zugmaschine und die Ballenpresse jeweils mittels des Assistenzsystems ansteuerbare Arbeitsaggregate umfassen. Das Assistenzsystem ist dazu vorgesehen und eingerichtet, einen Nutzer bei der Einstellung des Gespanns zur Durchführung eines Ballenpressvorgangs auf einem Feld zu unterstützen. Das Assistenzsystem ist dadurch gekennzeichnet, dass es dazu vorgesehen und eingerichtet ist, zumindest einen Betriebsparameter zumindest einer Maschinenanordnung aus zumindest einem dem Ballenpressvorgang vorgelagerten Prozessschritt abzurufen. Das Assistenzsystem ist dazu vorgesehen und eingerichtet, den zumindest einen Betriebsparameter der zumindest einen Maschinenanordnung in einer Analyseroutine derart zu verarbeiten, dass zumindest ein Betriebsparameter für das Gespann für die Durchführung des Ballenpressvorgangs ermittelt wird. Das Assistenzsystem ist dazu vorgesehen und eingerichtet, zumindest ein Arbeitsaggregat der Zugmaschine und/oder der Ballenpresse zur Einstellung des zumindest einen Betriebsparameters für das Gespann anzusteuern.

Das erfindungsgemäße Assistenzsystem erlaubt die Ermittlung eines oder mehrerer Betriebsparameters für das landwirtschaftliche Gespann, welche der Einstellung desselben für die Durchführung des Ballenpressvorgangs dienen, ohne, dass Daten zum auf dem Feld abgelegten Erntegut zwangsläufig vorliegen müssen. Vielmehr kann anhand des oder der Betriebsparameters einer oder mehrerer Maschinenanordnungen aus einem oder mehreren vorgelagerten Prozessschritten durch die Verarbeitung mittels des Assistenzsystems der oder die für die Durchführung des Ballenpressvorgangs erforderliche Betriebsparameter für das Gespann ermittelt werden. Diesem Vorgehen liegt die Annahme zugrunde, dass der Betriebsparameter einer Maschinenanordnung eines vorgelagerten Prozessschrittes indirekt mit gewissen Erntegutparametern des in dem Prozessschritt bearbeiteten Ernteguts auf dem Feld korreliert, sodass anhand des Betriebsparameters der Maschinenanordnung auf einen Erntegutparameter geschlossen werden kann und über diesen Zusammenhang dann der Betriebsparameter für das Gespann ermittelt und eingestellt werden kann, welches das Erntegut im Prozessschritt "Ballenpressvorgang" ebenfalls verarbeitet. Hierdurch wird sichergestellt, dass bei fehlender oder inkonsistenter Datenbasis bzgl. des mittels des Gespanns zu erntenden Ernteguts anhand des Betriebsparameters der Maschinenanordnung des vorgelagerten Prozessschrittes dennoch indirekt ein Rückschluss auf etwaige Erntegutparameter des auf dem Feld abgelegten und von dem Gespann zu erntenden Ernteguts getroffen werden kann, sodass eine hierfür geeignete Einstellung des Gespanns vorgenommen werden kann. Unabhängig davon, ob der Nutzer des Gespanns erfahren oder unerfahren ist, kann das Gespann, also die Zugmaschine und/oder die Ballenpresse, für den vorzunehmenden Ballenpressvorgang auf dem Feld geeignet eingestellt werden. Auf aufwendige und kostenintensive Sensoreinrichtungen zur Bestimmung von Ernteparametern, beispielsweise am Feld, die für die Einstellung des Gespanns an und für sich erforderlich wären, kann demnach verzichtet werden, trotz alledem aber eine geeignete Einstellung des Gespanns zur Ernte des auf dem Feld in einem spezifischen Zustand vorliegenden Ernteguts vor und/oder während des Ballenpressvorgangs erfolgen.

Gemäß einer vorteilhaften Weiterbildung der Erfindung ist vorgesehen, dass die Verarbeitung in der Analyseroutine auf einem Modell basiert, mittels dessen anhand des zumindest einen Betriebsparameters der Maschinenanordnung zumindest ein Erntegutparameter für während des Ballenpressvorgangs zu verarbeitendes Erntegut prognostiziert und anhand des zumindest einen Erntegutparameters der zumindest eine Betriebsparameter für das Gespann ermittelt wird.

Anhand des Modells, welches in der Analyseroutine von dem Assistenzsystem zur Verarbeitung der Eingangsgröße "Betriebsparameter Maschinenanordnung" zur Ausgangsgröße "Betriebsparameter Gespann" herangezogen wird, wird der Zusammenhang zwischen dem Betriebsparameter der Maschinenanordnung und dem Betriebsparameter für das Gespann anhand eines "virtuellen", prognostizierten Erntegutparameters geschaffen. Das den Ballenpressvorgang bzw. das Zielprodukt, nämlich den Ballen, maßgeblich beeinflussende Ausgangsprodukt, nämlich das auf dem Feld abgelegte Erntegut, findet somit bei der Einstellung des Gespanns für den Ballenpressvorgang über den im Modell definierten Zusammenhang Berücksichtigung, obwohl keine direkten Informationen hierüber vorliegen.

Gemäß einer vorteilhaften Weiterbildung der Erfindung ist vorgesehen, dass der zumindest eine Betriebsparameter der Maschinenanordnung eine während der Durchführung des vorgelagerten Prozessschrittes ermittelte Drehzahl eines Antriebsaggregats der Maschinenanordnung, ein von dem Antriebsaggregat der Maschinenanordnung bereitgestelltes Drehmoment, eine von einem Arbeitsaggregat der Maschinenanordnung bereitgestelltes Drehmoment, eine Fahrgeschwindigkeit der Maschinenanordnung, ein Durchsatz der Maschinenanordnung und/oder ein Energieverbrauch der Maschinenanordnung ist.

Hierdurch wird die Möglichkeit geschaffen anhand von an den Maschinenanordnungen der vorgelagerten Prozessschritte vorhandenen Sensoreinrichtungen einfach erfassbare Betriebsparameter, die sowieso nahezu immer vorhanden sind, für die Ermittlung des Betriebsparameters für das Gespann und somit die Einstellung des Gespanns für die Durchführung des Ballenpressvorgangs heranzuziehen. Neben der Tatsache, dass diese Betriebsparameter für die Maschinenanordnungen der vorgelagerten Prozessschritte charakteristisch sind und somit zur Bewertung der vorgelagerten Prozessschritte eh nahezu immer erfasst werden, hängen diese Betriebsparameter auch direkt von den Erntegutparametern des Ernteguts ab, das von diesen im jeweiligen Prozessschritt bearbeitet wurde. Somit wird über die Nutzung vorhandener Betriebsparameter eine ressourcenschonende und kostengünstige Möglichkeit geschaffen, das Gespann bestehend aus einer Zugmaschine und einer daran adaptierten Ballenpresse für den Ballenpressvorgang geeignet, gleichzeitig zuverlässig und robust einzustellen, sodass als Zielprodukt Ballen erhalten werden, die den Nutzeranforderungen entsprechen.

Gemäß einer vorteilhaften Weiterbildung der Erfindung ist vorgesehen, dass der zumindest eine Betriebsparameter der Maschinenanordnung und der zumindest eine Betriebsparameter für das Gespann jeweils mit einer Georeferenz verknüpft sind.

Vorzugsweise ist vorgesehen, dass das Assistenzsystem dazu vorgesehen und eingerichtet ist, eine Position des Gespanns auf dem Feld während der Durchführung des Ballenpressvorgangs zu bestimmen, die Position des Gespanns auf dem Feld mit der mit dem zumindest einen Betriebsparameter für das Gespann verknüpften Georeferenz zu vergleichen und bei einer Übereinstimmung der Position des Gespanns mit der Georeferenz das zumindest eine Arbeitsaggregat der Zugmaschine und/oder der Ballenpresse zur Einstellung des zumindest einen Betriebsparameters für das Gespann anzusteuern.

Die Verknüpfung der Betriebsparameter mit Georeferenzen erlaubt es, dass Gespann an den richtigen Stellen im Feld während der Durchführung des Ballenpressvorgangs hinsichtlich der dort vorherrschenden Bedingungen des Ernteguts anzupassen. Hierdurch kann verhindert werden, dass die Ballenpresse aufgrund örtlich falsch eingestellter Betriebsparameter in Überlastfälle gerät, wodurch eine Beschädigungsgefahr der Ballenpresse einerseits und ein Kostenrisiko durch einen temporären Ausfall der Ballenpresse andererseits in erheblichem Maße reduziert werden kann. Mit anderen Worten, ist die Ballenpresse an einer bestimmten Stelle im Feld so ist sie auch entsprechend für die an dieser Stelle vorherrschenden Bedingungen eingestellt.

Gemäß einer vorteilhaften Weiterbildung der Erfindung ist vorgesehen, dass der zumindest eine dem Ballenpressvorgang vorgelagerte Prozessschritt ein Prozessschritt "Ernten", ein Prozessschritt "Mähen", ein Prozessschritt "Wenden" und/oder ein Prozessschritt "Schwaden" ist, wobei eine bei dem Prozessschritt "Ernten" verwendete Maschinenanordnung ein Mähdrescher, eine bei dem Prozessschritt "Mähen" verwendete Maschinenanordnung ein landwirtschaftliches Gespann aus einer Zugmaschine und mindestens einem daran adaptierten Mähwerk, eine bei dem Prozessschritt "Wenden" verwendete Maschinenanordnung ein landwirtschaftliches Gespann aus einer Zugmaschine und einem daran adaptierten Wender und eine bei dem Prozessschritt "Schwaden" verwendete Maschinenanordnung ein landwirtschaftliches Gespann aus einer Zugmaschine und mindestens einem daran adaptierten Schwader ist.

Durch die Menge an für die Ermittlung des Betriebsparameters für das Gespann zu nutzender vorgelagerter Prozessschritte sowie entsprechender Maschinenanordnungen können verschiedenste Betriebsparameter von dem Assistenzsystem zur Bestimmung des zumindest einen Betriebsparameters für das Gespann, die durch Ansteuerung des zumindest einen Arbeitsaggregats des Gespanns eingestellt werden, herangezogen werden. Hierdurch werden sehr zuverlässige, für das auf dem Feld während der Durchführung des Ballenpressvorgangs zu erntenden Ernteguts geeignete und robuste Betriebsparameter für das Gespann ermittelt und an dem Gespann eingestellt.

Gemäß einer vorteilhaften Weiterbildung der Erfindung ist vorgesehen, dass der zumindest eine dem Ballenpressvorgang vorgelagerte Prozessschritt und der Ballenpressvorgang Prozessschritte eines zusammenhängenden Ernteprozesses sind oder der zumindest eine dem Ballenpressvorgang vorgelagerte Prozessschritt und der Ballenpressvorgang Prozessschritte unterschiedlicher Ernteprozesse sind.

Hierdurch wird die Möglichkeit geschaffen auf Betriebsparameter von Maschinenanordnungen zurückzugreifen, die einer Erntesaison entstammen oder einen historischen Datensatz repräsentieren, der verschiedenen Erntesaisons zugeordnet ist. Die Nutzung von historischen Datensätzen entfaltet insbesondere dahingehend Vorteile, dass bei einem Wechsel des auf dem Feld angebauten Ernteguts in unterschiedlichen Erntesaisons aufgezeichnete Betriebsparameter von Maschinenanordnungen, die in Prozessschritten in früheren Jahren bei gleichem angebautem Erntegut auf dem Feld eingesetzt wurden, nachgenutzt werden können.

Gemäß einer vorteilhaften Weiterbildung der Erfindung ist vorgesehen, dass der zumindest eine Betriebsparameter für das Gespann eine mittels eines Antriebsaggregats der Zugmaschine einstellbare Fahrgeschwindigkeit des Gespanns, ein mittels eines Lenksystems der Zugmaschine einstellbarer Lenkwinkel der Zugmaschine, eine Ausrichtung der Ballenpresse relativ zur Zugmaschine, eine Drehzahl einer Zapfwelle der Zugmaschine, ein mittels eines Hydrauliksystems der Zugmaschine bereitgestellter hydraulischer Druck, ein Reifendruck zumindest eines Bodeneingriffsmittels der Zugmaschine, ein Drehmoment und/oder eine Drehgeschwindigkeit einer Pick-up der Ballenpresse, ein Drehmoment und/oder eine Drehgeschwindigkeit eines Rotors der Ballenpresse, ein Zeitpunkt zur Aktivierung oder Deaktivierung von Schneidmessern der Ballenpresse, eine Drehzahl und/oder Anzahl von Hüben eines Raffers der Ballenpresse, ein in einer Presskammer der Ballenpresse aufgebrachter Pressdruck, ein Zeitpunkt zur Aktivierung oder Deaktivierung einer Knotereinrichtung der Ballenpresse und/oder ein Zeitpunkt zur Ablage eines Ballens ist.

Die Vielfalt der zu ermittelnden und einzustellenden Betriebsparameter für das Gespann sorgt dafür, dass alle auf den Ballenpressvorgang und das Ergebnis des Ballenpressvorgangs einflussnehmenden Arbeitsaggregate des Gespanns Berücksichtigung finden, sodass das Gespann ganzheitlich hinsichtlich der vorliegenden Bedingungen des Ernteguts auf dem Feld eingestellt werden kann.

Gemäß einer vorteilhaften Weiterbildung der Erfindung ist vorgesehen, dass das Assistenzsystem dazu vorgesehen und eingerichtet ist, zumindest einen Betriebsparametersatz der zumindest einen Maschinenanordnung aus dem zumindest einen dem Ballenpressvorgang vorgelagerten Prozessschritt abzurufen, wobei das Assistenzsystem dazu vorgesehen und eingerichtet ist, den zumindest einen Betriebsparametersatz der zumindest einen Maschinenanordnung in der Analyseroutine derart zu verarbeiten, dass zumindest ein Betriebsparametersatz für das Gespann für die Durchführung des Ballenpressvorgangs ermittelt wird, wobei das Assistenzsystem dazu vorgesehen und eingerichtet ist, das zumindest eine Arbeitsaggregat der Zugmaschine und/oder der Ballenpresse zur Einstellung des zumindest einen Betriebsparametersatzes für das Gespann anzusteuern.

Die Nutzung von Betriebsparametersätzen erlaubt es entlang des gesamten Arbeitsweges auf dem Feld geeignete Betriebsparameter am Gespann einstellen zu können, sodass örtlich variierenden Bedingungen auf dem Feld entsprechend Rechnung getragen werden kann. Anhand eines Betriebsparametersatzes kann eine Abarbeitungsroute für das Gespann geplant werden, wobei jeder Position entlang der Abarbeitungsroute geeignete Betriebsparameter, die an den entsprechenden Positionen durch Ansteuerung der Arbeitsaggregate des Gespanns am Gespann einzustellen sind, zugeordnet sind.

Gemäß einer vorteilhaften Weiterbildung der Erfindung ist vorgesehen, dass das Assistenzsystem dazu vorgesehen und eingerichtet ist, in einer Speichereinrichtung hinterlegte Referenzdaten abzurufen, wobei das Assistenzsystem dazu vorgesehen und eingerichtet ist, den zumindest einen Betriebsparameter für das Gespann in der Analyseroutine unter Berücksichtigung der Referenzdaten zu ermitteln, wobei die Referenzdaten vorzugsweise Wetterdaten und/oder agronomische Daten, insbesondere Bodendaten, Bestandsdaten, Ertragsdaten und/oder Flächendaten, umfassen.

Durch die Integration von Referenzdaten in den Bestimmungsprozess des Betriebsparameters für das Gespann kann die Genauigkeit und Robustheit des ermittelten Betriebsparameters weiter erheblich gesteigert werden. Insbesondere dann, wenn ein Betriebsparameter einer Maschinenanordnung eines vorgelagerten Prozessschrittes unter Umständen keine eindeutige Prognose eines Erntegutparameters zulässt und somit kein geeigneter Betriebsparameter für das Gespann ermittelt werden kann, kann durch die Nutzung von Referenzdaten trotz alledem ein geeigneter Betriebsparameter definiert werden, wobei in einem solchen Fall die Referenzdaten bei der Verarbeitung mittels des Assistenzsystems die Priorität vor den Betriebsparametern der Maschinenanordnungen eingeräumt bekommen.

Gemäß einer vorteilhaften Weiterbildung der Erfindung ist vorgesehen, dass das Assistenzsystem dazu vorgesehen und eingerichtet ist, aktualisierte Referenzdaten während des Ballenpressvorgangs abzurufen und den zumindest einen Betriebsparameter für das Gespann unter Berücksichtigung der aktualisierten Referenzdaten während der Durchführung des Ballenpressvorgangs anzupassen.

Hierdurch kann noch sich während der Durchführung des Ballenpressvorgangs ändernden Umweltbedingungen durch Anpassung der Betriebsparameter Rechnung getragen werden. Beispielsweise dann, wenn sich ein plötzlicher, unerwarteter Regenschauer ankündigt, der anhand der Referenzdaten ermittelt werden kann, könnte der oder die Betriebsparameter für das Gespann derart angepasst werden, dass das Feld noch vor Beginn des Regenschauers abgearbeitet ist.

Gemäß einer vorteilhaften Weiterbildung der Erfindung ist vorgesehen, dass das Assistenzsystem dazu vorgesehen und eingerichtet ist, das zumindest eine Arbeitsaggregat der Zugmaschine und/oder der Ballenpresse zur Einstellung des zumindest einen Betriebsparameters für das Gespann automatisch anzusteuern.

Gemäß einer vorteilhaften Weiterbildung der Erfindung ist vorgesehen, dass das Assistenzsystem mit einer Anzeigeeinrichtung sowie einer Ein- und Ausgabeeinheit zur Übertragung von Daten verbunden ist, wobei das Assistenzsystem dazu vorgesehen und eingerichtet ist, dem Nutzer den zumindest einen Betriebsparameter für das Gespann mittels der Anzeigeeinrichtung zur Freigabe, Ablehnung und/oder Anpassung desselben über die Ein- und Ausgabeeinheit anzuzeigen.

Vorzugsweise erfolgt die Kommunikation zwischen Assistenzsystem und Nutzer hierbei dialogbasiert.

Die automatisierte Ansteuerung des oder der Arbeitsaggregate des Gespanns schafft einen hochgradig automatisierten Ablauf des Ballenpressvorgangs, sodass das Assistenzsystem auch im Kontext eines mittels eines autonomen Gespanns durchgeführten Ballenpressvorgangs einsetzbar ist. Der Nutzer kann demnach bei der Einstellung des Gespanns unterstützt werden, ungeachtet dessen, ob er das Gespann selbst steuert oder nur die Funktion eines Supervisors, sei es als Onboard-Supervisor oder Remote-Supervisor, einnimmt. Die Möglichkeit den Betriebsparameter zur Freigabe, Ablehnung und/oder Anpassung anzuzeigen, erlaubt ferner den Erfahrungsgrad des Nutzers im Ermittlungs- und Einstellungsprozess des Betriebsparameters für das Gespann zu berücksichtigen. Ein erfahrener Nutzer könnte beispielsweise aufgrund seiner Kenntnisse dazu in der Lage sein gewisse Betriebsparameter für das Gespann anders zu definieren als es das Assistenzsystem vornehmen würde, da dem Nutzer Informationen vorliegen, die dem Assistenzsystem nicht vorliegen, oder der Nutzer Präferenzen hat. Ein unerfahrener Benutzer hingegen kann das Assistenzsystem die Ermittlung und Einstellung des Betriebsparameters für das Gespann vornehmen lassen, da der Nutzer selbst unter Umständen aufgrund mangelnder Kenntnisse eine schlechtere Parameterauswahl treffen würde.

Gemäß einer vorteilhaften Weiterbildung der Erfindung ist vorgesehen, dass das Assistenzsystem dazu vorgesehen und eingerichtet ist, zum Abrufen des zumindest einen Betriebsparameters der zumindest einen Maschinenanordnung unmittelbar auf die zumindest eine Maschinenanordnung und/oder auf eine Speichereinrichtung, in welcher der zumindest eine Betriebsparameter der zumindest einen Maschinenanordnung hinterlegt ist, zuzugreifen.

Gemäß einer vorteilhaften Weiterbildung der Erfindung ist vorgesehen, dass das Assistenzsystem dazu vorgesehen und eingerichtet ist, den zumindest einen Betriebsparameter für das Gespann an weitere landwirtschaftliche Gespanne einer Flotte von landwirtschaftlichen Gespannen zu übermitteln, wobei jedes Gespann der Flotte eine Zugmaschine und eine an die Zugmaschine adaptierte landwirtschaftliche Ballenpresse umfasst.

Insbesondere bei großen Feldern arbeiten oftmals mehrere Gespanne gleichzeitig, um das auf dem Feld abgelegte Erntegut zügig zu Ballen zu pressen. Die Möglichkeit nicht nur ein Gespann, sondern gleich mehrere bzw. alle Gespanne einer, vorzugsweise gleichzeitig auf einem Feld arbeitenden, Flotte einzustellen stellt sicher, dass alle Gespanne der Flotte ein qualitativ hochwertiges, den Wünschen entsprechendes Arbeitsergebnis, also Produkt, erzielen.

Weiterhin wird die erfindungsgemäße Aufgabe von einem landwirtschaftlichen Gespann umfassend eine landwirtschaftliche Zugmaschine, insbesondere einen Traktor, und eine an die Zugmaschine adaptierte landwirtschaftliche Ballenpresse sowie ein solches Assistenzsystem gemäß dem unabhängigen Patentanspruch 16 gelöst.

Die vorliegende Erfindung wird nachstehend anhand der in den Figuren abgebildeten Ausführungsformen näher beschrieben.

Es zeigen:
- FIG. 1: eine schematische und exemplarische Darstellung eines erfindungsgemäßen landwirtschaftlichen Gespanns, umfassend eine in Gestalt eines Traktors ausgebildete landwirtschaftliche Zugmaschine sowie eine in Gestalt einer Quaderballenpresse ausgebildete landwirtschaftliche Ballenpresse; und

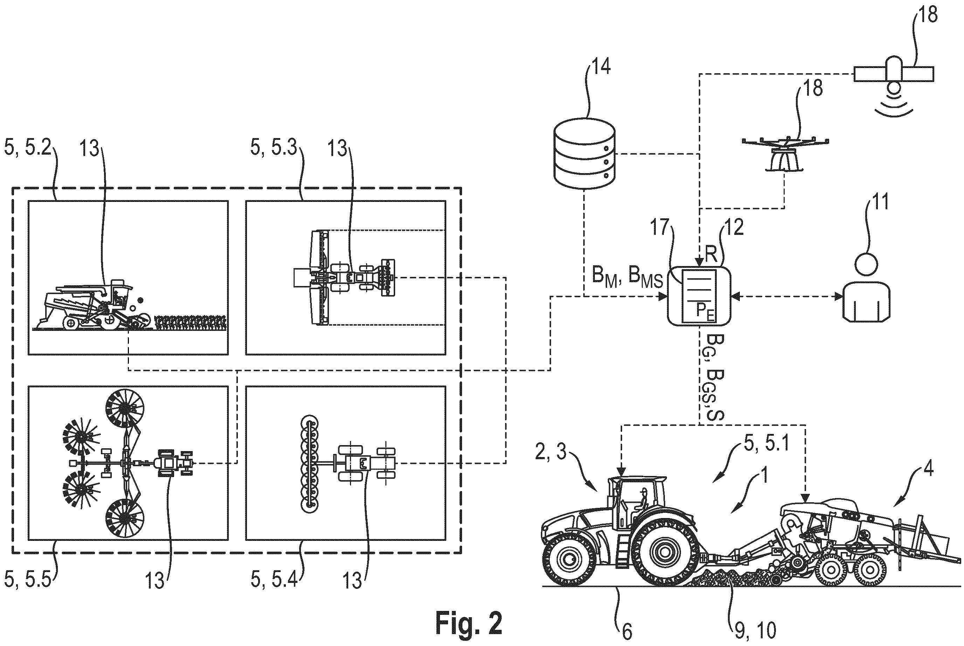

- FIG. 2: eine schematische und exemplarische Darstellung eines erfindungsgemäßen Assistenzsystems für das erfindungsgemäße landwirtschaftliche Ge-spann aus FIG. 1 im Kontext eines Ballenpressvorgangs.

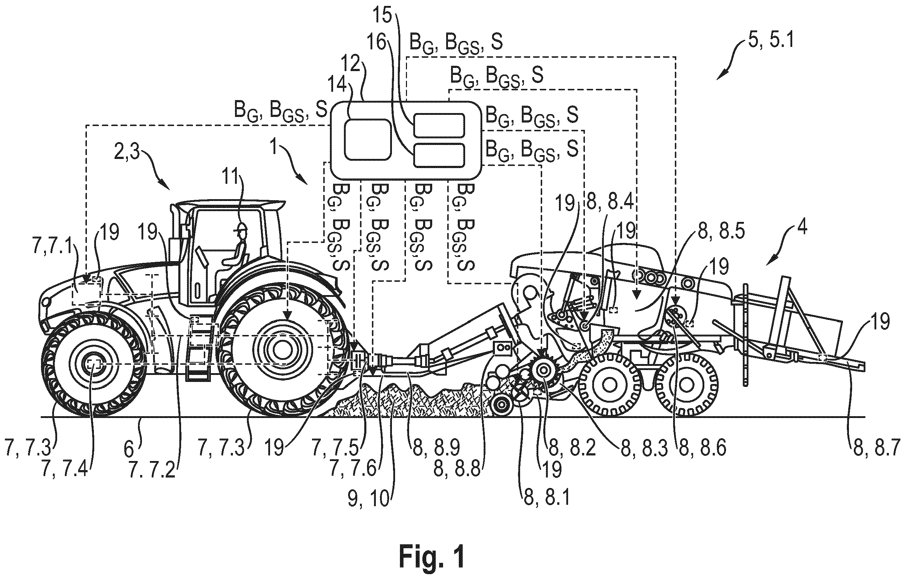

FIG. 1 zeigt ein landwirtschaftliches Gespann 1, welches aus einer landwirtschaftlichen Zugmaschine 2, hier in Gestalt eines Traktors 3, und einer an diese adaptierten landwirtschaftlichen Ballenpresse 4 besteht. Die Ballenpresse 4 ist in den FIGS. in Gestalt einer Quaderballenpresse dargestellt, wobei gleichermaßen eine Rundballenpresse an die Zugmaschine 2, hier den Traktor 3, adaptiert sein könnte. In FIG. 1 ist das landwirtschaftliche Gespann 1 dargestellt, während es den Prozessschritt "Ballenpressvorgang" 5.1 auf einem Feld 6 durchführt, nachfolgend vereinfacht als Ballenpressvorgang 5.1 bezeichnet.

Sowohl der Traktor 3 als auch die an den Traktor 3 adaptierte Ballenpresse 4 umfassen jeweils verschiedene Arbeitsaggregate 7, 8, für welche zur Durchführung des Ballenpressvorgangs 5.1 Betriebsparameter B_{G} bereitgestellt werden müssen. Arbeitsaggregate 7 des Traktors 3 sind vorzugsweise ein Antriebsaggregat 7.1, das als Verbrennungsmotor, als hybrides Antriebsaggregat oder aber als elektromotorisches Antriebsaggregat ausgestaltet sein kann, ein Antriebsstrang 7.2 mit verschiedenen Getriebebaugruppen, Kupplungen und Wellen, Bodeneingriffsmittel 7.3, hier in Gestalt von Reifen dargestellt, die allerdings auch als Raupenlaufwerke ausgebildet sein können, ein Lenksystem 7.4 zum Lenken des Gespanns 1, eine Zapfwelle 7.5 zur Übertragung von Antriebsleistung an die Ballenpresse 4 und/oder ein Hydrauliksystem 7.6 des Traktors 3. Arbeitsaggregate 8 der Ballenpresse 4 sind vorzugsweise eine Pick-up 8.1, ein Rotor 8.2, Schneidmesser 8.3, ein Raffer 8.4, eine Presskammer 8.5 mit einem Pressmittel, eine Knotereinrichtung 8.6, eine - in den FIGs. nicht dargestellte - Heckklappe, eine Ballenablageeinrichtung 8.7, ein Hydrauliksystem 8.8 und/oder eine Deichsel 8.9. Betriebsparameter B_{G} des Gespanns 1, die für die Durchführung des Ballenpressvorgangs 5.1 bereitgestellt und eingestellt werden können, sind vorzugsweise eine Fahrgeschwindigkeit des Gespanns 1, die beispielsweise mittels des Antriebsaggregats 7.1 des Traktors 3 vorgegeben werden kann, ein Lenkwinkel des Traktors 3, der beispielsweise mittels des Lenksystems 7.4 des Traktors 3 eingestellt werden kann, eine Ausrichtung der Ballenpresse 4 relativ zum Traktor 3, die beispielsweise mittels der Deichsel 8.9 eingestellt werden kann, eine Drehzahl der Zapfwelle 7.5 des Traktors 3, ein vom Traktor 3 mittels des Hydrauliksystems 7.6 bereitstellbarer hydraulischer Druck, ein Reifendruck zumindest eines Bodeneingriffsmittels 7.3 des Traktors 3, ein Drehmoment und/oder eine Drehgeschwindigkeit der Pick-up 8.1 der Ballenpresse 4, ein Drehmoment und/oder eine Drehgeschwindigkeit des Rotors 8.2 der Ballenpresse 4, ein Zeitpunkt zur Aktivierung oder Deaktivierung der Schneidmesser 8.3 der Ballenpresse 4, eine Drehzahl und/oder Anzahl von Hüben des Raffers 8.4 der Ballenpresse 4, ein in der Presskammer 8.5 der Ballenpresse 4 aufgebrachter Pressdruck, ein Zeitpunkt zur Aktivierung oder Deaktivierung der Knotereinrichtung 8.6 und/oder ein Zeitpunkt zur Ablage eines Ballens. Weitere Arbeitsaggregate 7, 8 sowie Betriebsparameter B_{G} des Gespanns 1, die für Durchführung des Ballenpressvorgangs 5.1 relevant seien können, sind durch die zuvor genannte Nennung von spezifischen, bevorzugten Arbeitsaggregaten 7, 8 sowie Betriebsparametern B_{G} nicht ausgeschlossen.

Die Bestimmung der bereitzustellenden und einzustellenden Betriebsparameter B_{G} des Gespanns 1 ist insbesondere abhängig vom Zustand des mittels des Gespanns 1 zu erntenden Ernteguts 9, welches auf dem Feld 6 in Form von Schwaden 10 abgelegt ist. Die Bestimmung von Informationen, die den Zustand des auf dem Feld 6 abgelegten Ernteguts 9 charakterisieren, bedarf herkömmlicher Weise zusätzlicher Systeme, insbesondere am Feld 6 vorhandene Sensorik, die allerdings nicht immer vorhanden sind, sodass die erforderlichen Informationen zur Bereitstellung und Einstellung der Betriebsparameter B_{G} des Gespanns 1 nicht vorliegen und somit eine Durchführung des Ballenpressvorgangs 5.1 nur unzureichend oder überhaupt nicht möglich ist, insbesondere dann, wenn ein wenig erfahrener Nutzer 11 das Gespann 1 steuert.

Wesentlich ist nunmehr, dass Informationen zum Zustand des auf dem Feld 6 abgelegten Ernteguts 6 nicht vorliegen müssen, um das Gespann 1 dennoch für die Durchführung des Ballenpressvorgangs 5.1 entsprechend einzustellen, also geeignete Betriebsparameter B_{G} des Gespanns 1 für die Durchführung des Ballenpressvorgangs 5.1 bereitzustellen. Hierzu ist ein Assistenzsystem 12 für das landwirtschaftliche Gespann 1 vorgesehen, mittels dessen die Arbeitsaggregate 7, 8 des Gespanns 1, also des Traktors 3 und/oder der Ballenpresse 4, ansteuerbar sind bzw. angesteuert werden können. Das Assistenzsystem 12 ist dazu vorgesehen und eingerichtet, dient also dem Zweck, den Nutzer 11 bei der Einstellung des Gespanns 1 zur Durchführung des Ballenpressvorgangs 5.1 auf dem Feld 6 zu unterstützen. Um diese Unterstützung des Nutzers 11 zu realisieren, ohne hierbei zwangsläufig Informationen zum auf dem Feld 6 abgelegten Erntegut 9 verfügbar zu haben, ist das Assistenzsystem 12 dazu vorgesehen und eingerichtet, zumindest einen Betriebsparameter B_{M} zumindest einer Maschinenanordnung 13 aus zumindest einem dem Ballenpressvorgang 5.1 vorgelagerten Prozessschritt 5 abzurufen. Das Assistenzsystem 12 ist weiter dazu vorgesehen und eingerichtet, den zumindest einen Betriebsparameter B_{M} der zumindest einen Maschinenanordnung 13 in einer Analyseroutine derart zu verarbeiten, dass zumindest ein Betriebsparameter B_{G} des Gespanns 1 für die Durchführung des Ballenpressvorgang 5.1 ermittelt wird. Weiter ist das Assistenzsystem 12 dazu vorgesehen und eingerichtet, zumindest ein Arbeitsaggregat 7, 8 des Gespanns 1, also des Traktors 3 und/oder der Ballenpresse 4, zur Einstellung des zumindest einen zuvor ermittelten Betriebsparameters B_{G} für das Gespann 1 anzusteuern. Anders ausgedrückt, das Assistenzsystem 12 ruft einen oder auch mehrere Betriebsparameter B_{M} einer Maschinenanordnung 13 aus einem oder auch mehreren vorgelagerten Prozessschritten 5 ab, verarbeitet diesen bzw. diese in der Analyseroutine zu einem oder auch mehreren Betriebsparametern B_{G} für das Gespann 1 und steuert das oder die Arbeitsaggregate 7, 8 des Gespanns 1 über Steuersignale S derart an, dass der oder die besagten Betriebsparameter B_{G} für das Gespann 1 eingestellt werden.

Anstelle von Informationen zu dem auf dem Feld 6 abgelegten Erntegut 9 zieht das Assistenzsystem 12 für die Bestimmung von Betriebsparametern B_{G} für das Gespann 1 demnach Betriebsparameter B_{M} von Maschinenanordnungen 13 aus vorgelagerten Prozessschritten 5 heran. Hierdurch kann ohne, dass sensorisch erfasste Informationen zum Erntegut 9 vorliegen, auf den Zustand des Ernteguts 9 anhand der Betriebsparameter B_{M} der Maschinenanordnungen 13 der dem Ballenpressvorgang 5.1 vorgelagerten Prozessschritte 5 geschlossen werden.

Das Assistenzsystem 12 kann Teil des landwirtschaftlichen Gespanns 1 oder aber eine hiervon räumlich getrennte Einrichtung sein, die mit dem Gespann 1 bzw. den verschiedenen Arbeitsaggregaten 7, 8 des Gespanns 1 kommunizieren kann. Der Betriebsparameter B_{M} der Maschinenanordnung 13 des vorgelagerten Prozessschrittes 5 kann von der Maschinenanordnung 13 bzw. einer Steuereinrichtung der Maschinenanordnung 13 an eine Speichereinrichtung 14 übermittelt werden, wobei die Speichereinheit 14 wahlweise Bestandteil des Assistenzsystems 12 oder eine von dem Assistenzsystem 12 unabhängige Speichereinheit 14 ist, auf die das Assistenzsystem 12 zugreifen kann sein. Das Assistenzsystem 12 kann allerdings genauso zum Abrufen des Betriebsparameter B_{M} der Maschinenanordnung 13 auch unmittelbar auf die Maschinenanordnung 13 selbst zugreifen. Das Assistenzsystem 12, die Maschinenanordnung(en) 13, die Speichereinrichtung(en) 14 und/oder das Gespann 1 sind zur Übertragung von Daten miteinander verbunden, wobei die Übertragung wahlweise drahtlos oder kabelgebunden erfolgen kann. Weiterhin kann eine Anzeigeeinrichtung 15 sowie eine Ein- und Ausgabeeinheit 16 vorgesehen sein. Die Anzeigeeinrichtung 15 sowie die Ein- und Ausgabeeinheit 16 können wahlweise Bestandteil des Assistenzsystems 12 sein oder von diesem unabhängig ausgeführt sein, beispielsweise in Gestalt eines separaten Terminals oder als Bestandteil eines mobilen Endgeräts. Auch die Anzeigeeinrichtung 15 und die Ein- und Ausgabeeinheit 16 sind zumindest mit dem Assistenzsystem 12 zur Übertragung von Daten verbunden, wobei auch hier die Übertragung wahlweise drahtlos oder kabelgebunden erfolgen kann.

Damit Betriebsparameter B_{M} von Maschinenanordnungen 13 aus vorgelagerten Prozessschritten 5 für die Bestimmung von Betriebsparametern B_{G} für das Gespann 1 herangezogen werden können basiert die Verarbeitung, die mittels des Assistenzsystems 12 in der Analyseroutine vorgenommen wird, auf einem Modell 17. Dieses Modell 17 sorgt dafür, dass anhand des zumindest einen Betriebsparameters B_{M} der zumindest einen Maschinenanordnungen 13 aus dem zumindest einen vorgelagerten Prozessschritt 5 zumindest ein Erntegutparameter P_{E} für das während des Ballenpressvorgangs 5.1 zu verarbeitende Erntegut 9, welches auf dem Feld 6 abgelegt ist, prognostiziert wird. Anhand des zumindest einen prognostizierten Erntegutparameters P_{E} ermittelt das Assistenzsystem 12 mittels des Modells 17 den zumindest einen Betriebsparameter B_{G} für das Gespann 1. Um den Zusammenhang von Betriebsparameter B_{M} und Betriebsparameter B_{G} über den prognostizierten Erntegutparameter P_{E} zu schaffen, kann das Modell 17 beispielsweise auf in der Speichereinheit 14 des Assistenzsystems 12 hinterlegte Daten zurückgreifen, die den Betriebsparameter B_{G} für das Gespann 1 abhängig von spezifischen Erntegutparametern P_{E} definieren. Ist ein Erntegutparameter P_{E} in der Analyseroutine basierend auf dem Modell 17 anhand des Betriebsparameters B_{M} mittels des Assistenzsystems 12 prognostiziert worden, so kann anhand der in der Speichereinheit 14 hinterlegten Daten ein für diesen Erntegutparameter P_{E} hinterlegter Betriebsparameter B_{G} für das Gespann 1 ermittelt werden und das Arbeitsaggregat 7, 8 des Gespanns 1 von dem Assistenzsystem 12 über die Steuersignale S zur Einstellung des Betriebsparameters B_{G} angesteuert werden.

Das in der Analyseroutine angewandte Modell 17 kann gemäß einer Ausführungsform auch auf einer künstlichen Intelligenz KI basieren. Bei einem solchen Maschinenlernmodell kann es sich beispielsweise um ein trainiertes künstliches neuronales Netz, vorzugsweise um ein Artificial Neural Network, ein sogenanntes ANN, oder ein Convolutional Neural Network, ein sogenanntes CNN, handeln. Auch andere trainierbare Kl-Architekturen sind gleichermaßen als Maschinenlernmodelle für die Verarbeitung des oder der Betriebsparameter B_{M} in der Analyseroutine zu dem oder den Betriebsparametern B_{G} vorstellbar.

Der Betriebsparameter B_{M} der Maschinenanordnung 13 ist vorzugsweise eine während der Durchführung des vorgelagerten Prozessschrittes 5 ermittelte Drehzahl eines Antriebsaggregats der Maschinenanordnung 13, ein von dem Antriebsaggregat der Maschinenanordnung 13 bereitgestelltes Drehmoment, eine von einem Arbeitsaggregat der Maschinenanordnung 13 bereitgestelltes Drehmoment, eine Fahrgeschwindigkeit der Maschinenanordnung 13, ein Durchsatz der Maschinenanordnung 13 und/oder ein Energieverbrauch der Maschinenanordnung 13.

Der von dem Assistenzsystem 12 zur Bestimmung des Betriebsparameters B_{G} des Gespanns 1 herangezogene Betriebsparameter B_{M} der Maschinenanordnung 13 ist gemäß einer bevorzugten Ausführungsform mit einer Georeferenz verknüpft. Mit anderen Worten, der Betriebsparameter B_{M} der Maschinenanordnung 13 wird während des vorgelagerten Prozessschrittes 5 von einer geeigneten Sensorik, beispielsweise einem Drehmomentsensor, einem Lastsensor, einem Drucksensor, einer Kamera und/oder einem Beschleunigungssensor, erfasst und mit der Position der Maschinenanordnung 13 auf dem Feld 6 zum Zeitpunkt der Erfassung verknüpft. Die Position der Maschinenanordnung 13 auf dem Feld 6 kann beispielsweise mittels GPS oder einer anderen Verortungstechnik erfolgen. Der in der Analyseroutine anhand des georeferenzierten Betriebsparameters B_{M} der Maschinenanordnung 13 ermittelte Betriebsparameter B_{G} des Gespanns 1 ist gemäß einer bevorzugten Ausführungsform ebenfalls mit einer Georeferenz verknüpft, und zwar mit der entsprechenden Georeferenz. Hierdurch wird sichergestellt, dass eine Ansteuerung des Arbeitsaggregats 7, 8 des Gespanns zur Einstellung des Betriebsparameters B_{G} für das Gespann 1 örtlich während des Ballenpressvorgangs 5.1 auf dem Feld 6 dort erfolgt, wo auch der entsprechende Betriebsparameter B_{M} der Maschinenanordnung 13 während des vorgelagerten Prozessschrittes 5 ermittelt wurde. Das Assistenzsystem 12 ist in diesem Zusammenhang dazu vorgesehen und eingerichtet, eine Position des Gespanns 1 auf dem Feld 6 während der Durchführung des Ballenpressvorgang 5.1 zu bestimmen. Die bestimmte Position des Gespanns 1 auf dem Feld 6 wird dann mit der mit dem ermittelten Betriebsparameter B_{G} für das Gespann 1 verknüpften Georeferenz verglichen. Stimmt die bestimmte Position des Gespanns 1 mit der Georeferenz des Betriebsparameters B_{G} für das Gespann 1 überein, wird das Arbeitsaggregat 7, 8 des Gespanns 1 zur Einstellung des Betriebsparameters B_{G} für das Gespann 1 angesteuert. Diese Ansteuerung erfolgt während der Durchführung des Ballenpressvorgang 5.1. Hierdurch wird sichergestellt, dass das Gespann 1, also der Traktor 3 und/oder die Ballenpresse 4, bei Erreichen der entsprechenden Feldposition im Hinblick auf das dort abgelegten Erntegut 9 angepasst eingestellt ist.

Das Assistenzsystem 12 ist nicht nur dazu in der Lage einzelne oder mehrere Betriebsparameter B_{M} der Maschinenanordnung 13 abzurufen, sondern ebenfalls Betriebsparametersätze B_{MS} der Maschinenanordnung 13. Ein Betriebsparametersatz B_{MS} stellt dabei eine Menge eines Betriebsparameters B_{M} dar, welcher über die gesamte Dauer des durchgeführten vorgelagerten Prozessschrittes 5 kontinuierlich oder in regelmäßigen zeitlichen Intervallen mittels der geeigneten Sensorik erfasst wurde. Ruft das Assistenzsystem 12 einen Betriebsparametersatz B_{MS} ab, so ist das Assistenzsystem 12 dazu eingerichtet, einen entsprechenden Betriebsparametersatz B_{GS} für das Gespann 1 in der Analyseroutine zu ermitteln. Hierdurch wird eine Menge eines Betriebsparameters B_{G} erhalten, anhand der das Gespann 1 während der gesamten Dauer des Ballenpressvorgang 5.1 angesteuert werden kann. Die einzelnen Betriebsparameter B_{M}, B_{G} eines Betriebsparametersatzes B_{MS}, B_{GS} sind vorzugsweise jeweils mit einer Georeferenz verknüpft, sodass Betriebsparameter B_{M}, B_{G} entlang einer gesamten Arbeitsstrecke auf dem Feld 6 zur Verfügung stehen.

Bei den bereits erwähnten dem Ballenpressvorgang 5.1 vorgelagerten Prozessschritten 5 kann es sich um verschiedene Prozessschritte 5 eines Ernteprozesses handeln. Der Ballenpressvorgang 5.1 und der oder die vorgelagerten Prozessschritte 5 können Bestandteil eines zusammenhängenden Ernteprozesses sein können allerdings auch unterschiedlichen Ernteprozessen angehören. Hierdurch wird die Möglichkeit geschaffen auf Betriebsparameter B_{M} von Maschinenanordnungen 13 zurückzugreifen, die einer Erntesaison entstammen oder einen historischen Datensatz repräsentieren, der verschiedenen Erntesaisons zugeordnet ist. Die Nutzung von historischen Datensätzen entfaltet insbesondere dahingehend Vorteile, dass bei einem Wechsel des auf dem Feld 6 angebauten Erntegut 9 in unterschiedlichen Erntesaisons aufgezeichnete Betriebsparameter B_{M} von Maschinenanordnungen 13, die in Prozessschritten 5 in früheren Jahren bei gleichem angebautem Erntegut 9 auf dem Feld 6 eingesetzt wurden, nachgenutzt werden können.

Die vorgelagerten Prozessschritte 5 umfassen beispielsweise einen Prozessschritt "Ernten" 5.2, wobei die beim Ernten 5.1 verwendete zumindest eine Maschinenanordnung 13 ein Mähdrescher ist. Neben dem Ernten 5.1 kann ein weiterer vorgelagerter Prozessschritt 5 der Prozessschritte "Mähen" 5.3 sein, wobei zumindest eine beim Mähen 5.3 verwendete Maschinenanordnung 13 ein landwirtschaftliches Gespann aus einer Zugmaschine und mindestens einem daran adaptierten Mähwerk ist. Neben den vorgelagerten Prozessschritten Ernten 5.2 und Mähen 5.3 kann ein weiterer vorgelagerten Prozessschritte 5 der Prozessschritte "Wenden" 5.4 sein, wobei zumindest eine beim Wenden 5.4 verwendete Maschinenanordnung 13 ein landwirtschaftliches Gespann aus einer Zugmaschine und einem daran adaptierten Wender ist. Ein weiterer dem Ballenpressvorgang 5.1 im Ernteprozess unmittelbar vorgelagerter Prozessschritte 5 kann der Prozessschritt "Schwaden" 5.5 sein, wobei zumindest eine beim Schwaden 5.5 verwendete Maschinenanordnung 13 ein landwirtschaftliches Gespann aus einer Zugmaschine und mindestens einem daran adaptierten Schwader ist.

Durch die Varianz der vorgelagerten Prozessschritte 5 können verschiedenste Betriebsparameter B_{M} verschiedenster Maschinenanordnungen 13 aus verschiedensten vorgelagerten Prozessschritten 5 von dem Assistenzsystem 12 zur Bestimmung des zumindest einen Betriebsparameters B_{G} für das Gespann 1, die durch Ansteuerung des zumindest einen Arbeitsaggregats 7, 8 des Gespanns 1 eingestellt werden, herangezogen werden. So können spezifische Betriebsparameter B_{M} einer Maschinenanordnung 13 beispielsweise die Fahrgeschwindigkeit eines Mähdreschers und/oder eines Gespanns aus Zugmaschine und adaptiertem Anbaugerät, der Energieverbrauch eines Mähdreschers und/oder eines Gespanns aus Zugmaschine und adaptiertem Anbaugerät oder dergleichen sein.

Am Beispiel der Fahrgeschwindigkeit eines Mähdreschers in einem vorgelagerten Prozessschritt "Ernten" 5.2 als von dem Assistenzsystem 12 herangezogener Betriebsparameter B_{M} bzw. Betriebsparametersatz B_{MS} lässt sich das erfindungsgemäße Vorgehen beispielhaft anschaulich beschreiben: Während der Ernte mit dem Mähdrescher in einem Prozessschritt "Ernten" 5.1 wird mittels einer geeigneten Sensorik fortwährend während der Durchführung des Prozessschrittes 5.1 die Fahrgeschwindigkeit des Mähdreschers auf dem Feld 6 ermittelt. Jeder zu einem Zeitpunkt ermittelte Betriebsparameter B_{M} Fahrgeschwindigkeit wird mit einer Georeferenz verknüpft, die eine Aussage über die Position des Mähdreschers zu eben jenem Zeitpunkt, zu dem die bestimmte Fahrgeschwindigkeit erfasst wurde, zulässt. Das Assistenzsystem 12 greift vor und/oder während der Durchführung des nachgelagerten Ballenpressvorgangs 5.1 nun auf den vorhanden Betriebsparametersatz B_{MS} für die Fahrgeschwindigkeit des Mähdreschers zu und verarbeitet diesen in der Analyseroutine. War die Fahrgeschwindigkeit des Mähdreschers an einer Feldposition beispielsweise besonders gering oder geringer als an anderen Positionen auf dem Feld 6, so kann man davon ausgehen, dass dort beispielsweise die Bestandsdichte höher war, sodass auch das Schwadvolumen an dieser Feldposition hoch ist. Ist das Schwadvolumen an einer Feldposition hoch, so müssen entsprechende Betriebsparameter B_{G} für das Gespann 1 gewählt werden, um beispielsweise ein Verstopfen der Ballenpresse 4 an diesen Stellen zu verhindern. Über derartige Zusammenhänge, die durch das zuvor beschriebene Modell 17 abgebildet werden, wird anhand des Betriebsparametersatzes B_{MS} für die Fahrgeschwindigkeit des Mähdreschers ein Betriebsparametersatz B_{GS} oder auch mehrere Betriebsparametersätze B_{GS} zur Einstellung des Gespanns 1, also des Traktors 3 und/oder der Ballenpresse 4, ermittelt, wobei jeder Betriebsparameter B_{G} mit der entsprechenden Georeferenz verknüpft ist, welche der die Grundlage bildende Betriebsparameter B_{M} des Mähdreschers ebenfalls hatte. So könnte beispielsweise ein Betriebsparametersatz B_{GS} für die Fahrgeschwindigkeit des Gespanns 1 ermittelt werden, der für jede georeferenzierte Position auf dem Feld 6 einen entsprechenden Betriebsparameter B_{G} für die Fahrgeschwindigkeit des Gespanns 1 umfasst. Weiterhin könnte auch ein Betriebsparametersatz B_{GS} für die Drehgeschwindigkeit und/oder das Drehmoment der Pick-up 8.1 der Ballenpresse 4 ermittelt werden. Das Assistenzsystem 12 steuert anschließend die Arbeitsaggregate 7, 8 des Gespanns 1 derart an, dass die Betriebsparameter B_{G} an der entsprechenden Feldposition eingestellt sind.

Das Assistenzsystem 12 kann weiterhin auf sogenannte Referenzdaten R zugreifen bzw. diese abrufen. Solche Referenzdaten R werden von Sensoreinrichtungen 18 bereitgestellt und/oder sind in der Speichereinrichtung 14 oder einer von der Speichereinrichtung 14 unabhängigen Speichereinrichtung hinterlegt. Die Kommunikation zwischen Assistenzsystem 12 und Speichereinrichtung 14 kann wahlweise drahtlos oder kabelgebunden erfolgen. Referenzdaten R können beispielsweise Wetterdaten, wie eine Temperatur, eine Luftfeuchtigkeit, ein Luftdruck oder dergleichen, und/oder agronomische Daten, wie Bodendaten, Bestandsdaten, Ertragsdaten und/oder Flächendaten, umfassen. Das Assistenzsystem 12 ist dazu vorgesehen und eingerichtet, den Betriebsparameter B_{G} für das Gespann 1 in der Analyseroutine unter Berücksichtig von solchen Referenzdaten R zu ermitteln. Durch die Integration von Referenzdaten in den Bestimmungsprozess des Betriebsparameters B_{G} kann die Genauigkeit und Robustheit des ermittelten Betriebsparameters B_{G} erheblich gesteigert werden.

Da die Möglichkeit besteht, dass sich Referenzdaten R während der Durchführung des Ballenpressvorgangs 5.1 verändern bzw. aktualisieren, ist das Assistenzsystem 12 dazu in der Lage auch solche aktualisierten Referenzdaten R zu berücksichtigen und den ermittelten Betriebsparameter B_{G} für das Gespann 1 unter Berücksichtigung der Aktualisierung anzupassen. Weiterhin ist es möglich, dass der Traktor 3 und/oder die Ballenpresse 4 über Sensoreinrichtungen 19 verfügen, welche unmittelbar Erntegutparameter P_{E}, beispielsweise entlang des Gutflusses des Ernteguts 9 durch die Ballenpresse 4 während der Durchführung des Ballenpressvorgangs 5.1, und/oder Referenzdaten R ermitteln können. Auch solche Daten bzw. Parameter P_{E}, R können von dem Assistenzsystem 12 für die Anpassung des Betriebsparameters B_{G} für das Gespann 1 genutzt werden und in der Analyseroutine Verwendung finden, um die Genauigkeit und Robustheit des Betriebsparameters B_{G} für das Gespann 1 zu erhöhen.

Weiterhin ist es möglich, der Ermittlung des Betriebsparameters B_{G} für das Gespann 1 eine oder mehrere Optimierungsstrategien zugrunde zu legen. Eine derartige Optimierungsstrategie kann beispielsweise von dem Nutzer 11 über die Ein- und Ausgabeeinheit 16 vorgegeben werden. Sofern eine solche Optimierungsstrategie vorgegeben wird, berücksichtigt das Assistenzsystem 12 diese Optimierungsstrategie als Randbedingung während der Verarbeitung des Betriebsparameters B_{M} der Maschinenanordnung 13 zu dem Betriebsparameter B_{G} für das Gespann 1 in der Analyseroutine. Der erhaltene Betriebsparameter B_{G} für das Gespann 1 basiert demnach auf dem Betriebsparameter B_{M} der Maschinenanordnung 13 und ist im Hinblick auf die vorgegebene Optimierungsstrategie angepasst. Mögliche vorgebbare Optimierungsstrategien sind beispielsweise die Optimierungsstrategien "Ballenqualität", "Ballendichte", "Energieverbrauch der Ballenpresse", "Durchsatz der Ballenpresse", "Garnmaterial" und/oder "Lebensdauer der Ballenpresse", wobei für jede dieser Optimierungsstrategien ein zu erreichender Zielwert definiert werden kann. Für die Optimierungsstrategie "Ballendichte" kann beispielsweise der Zielwert "Gewicht Erntegut/Volumen Ballen", für die Optimierungsstrategie "Ballenqualität" beispielsweise die Zielwerte "Gewicht Erntegut/Volumen Ballen" und "Feuchtigkeit Erntegut pro Ballen", für die Optimierungsstrategie "Energieverbrauch der Ballenpresse" beispielsweise der Zielwert "Menge Kraftstoff/Zeiteinheit", für die Optimierungsstrategie "Durchsatz der Ballenpresse" beispielsweise der Zielwert "Gewicht oder Volumen Erntegut/Zeiteinheit", für die Optimierungsstrategie "Garnmaterial" beispielsweise der Zielwert "Dicke oder Festigkeit des Garns", und/oder für die Optimierungsstrategie "Lebensdauer der Ballenpresse" beispielsweise der Zielwert "Anzahl Arbeitsstunden" definiert bzw. vorgegeben werden. Es ist auch möglich mehrere Optimierungsstrategien zu definieren bzw. vorzugeben, die dann von dem Assistenzsystem 12 berücksichtigt werden, derart, dass der ermittelte Betriebsparameter B_{G} für das Gespann 1 im Hinblick auf beide Optimierungsstrategien bzw. die definierten Zielwerte der Optimierungsstrategien harmonisiert ist. Auch kann bei der Definition bzw. Vorgabe mehrere Optimierungsstrategien eine Gewichtung derselben vorgenommen werden, die dann ebenfalls vom Assistenzsystem 12 bei der Ermittlung des Betriebsparameters B_{G} für das Gespann 1 berücksichtigt wird.

Die Ansteuerung des Arbeitsaggregats 7, 8 des Gespanns 1 erfolgt mittels des Assistenzsystems 12 vorzugsweise automatisch mittels der entsprechenden Steuersignale S. Das Assistenzsystem 12 ist allerdings dazu vorgesehen und eingerichtet, dem Nutzer 11 den in der Analyseroutine ermittelten Betriebsparameter B_{G} für das Gespann 1 mittels der Anzeigeeinrichtung 15 anzuzeigen, sodass der Nutzer 11 den angezeigten Betriebsparameter B_{G} mittels der Ein- und Ausgabeeinheit 16 freigeben, ablehnen und/oder anpassen kann.

Gemäß einer weiteren Ausführungsform kann es vorgesehen sein, dass der Ballenpressvorgang 5.1 von einer Flotte aus landwirtschaftlichen Gespannen 1 durchgeführt wird, wobei jedes Gespann eine Zugmaschine 2, vorzugsweise in Gestalt eines Traktors 3, und einer landwirtschaftlichen Ballenpresse 4 umfasst. Das Assistenzsystem 12 ist bei einem derartigen Flottenbetrieb dazu in der Lage den ermittelten Betriebsparameter B_{G} für das Gespann 1 an alle Gespanne 1 der Flotte zu übermitteln. Das Assistenzsystem 12 kann beispielsweise Bestandteil eines solchen Gespanns 1 sein, wodurch dieses Gespann 1 die Funktion eines Master-Gespanns übernimmt und mit den anderen Gespannen 1, die Slave-Gespanne darstellen, zur Übertragung des Betriebsparameters B_{G}, vorzugsweise drahtlos, kommuniziert. Diese Ausgestaltung stellt sicher, dass Gespanne 1 einer Flotte während der Durchführung eines gemeinsamen Ballenbildungsvorgangs 5.1 mit zumindest im Wesentlichen identischen Betriebsparametern B_{G} operieren.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Landwirtschaftliches Gespann | 8.6 | Knotereinrichtung Ballenpresse |
| 2 | Landwirtschaftliche Zugmaschine | 8.7 | Ballenablageeinrichtung Ballenpresse |
| 3 | Traktor | | |
| 4 | Landwirtschaftliche Ballenpresse | 8.8 | Hydrauliksystem Ballenpresse |
| 5 | Prozessschritt | 8.9 | Deichsel Ballenpresse |
| 5.1 | Ballenpressvorgang | 9 | Erntegut |
| 5.2 | Ernten | 10 | Schwad |
| 5.3 | Mähen | 11 | Nutzer |
| 5.4 | Wenden | 12 | Assistenzsystem |
| 5.5 | Schwaden | 13 | Maschinenanordnung |
| 6 | Feld | 14 | Speichereinrichtung |
| 7 | Arbeitsaggregat Zugma- | 15 | Anzeigeeinrichtung |
| | schine/Traktor | 16 | Ein- und Ausgabeeinheit |
| 7.1 | Antriebsaggregat Zugmaschine/Traktor | 17 | Modell |
| | | 18 | Sensoreinrichtung |
| 7.2 | Antriebsstrang Zugmaschine/Traktor | 19 | Sensoreinrichtung Gespann |
| 7.3 | Bodeneingriffsmittel Zugmaschine/Traktor | BG | Betriebsparameter Gespann (Zugmaschine/Traktor und/oder Ballenpresse) |
| 7.4 | Lenksystem Zugmaschine/Traktor | | |
| 7.5 | Zapfwelle Zugmaschine/Traktor | B_{M} | Betriebsparameter Maschinenanordnung |
| 7.6 | Hydrauliksystem Zugmaschine/Traktor | | |
| | | S | Steuersignal |
| 8 | Arbeitsaggregat Ballenpresse | P_{E} | Erntegutparameter |
| 8.1 | Pick-up Ballenpresse | B_{GS} | Betriebsparametersatz Gespann (Zugmaschine/Traktor und/oder Ballenpresse) |
| 8.2 | Rotor Ballenpresse | | |
| 8.3 | Schneidmesser Ballenpresse | B_{MS} | |
| 8.4 | Raffer Ballenpresse | | Betriebsparametersatz Maschinenanordnung |
| 8.5 | Presskammer Ballenpresse | R | Referenzdaten |

## Patentansprüche

1. Assistenzsystem (12) für ein landwirtschaftliches Gespann (1), wobei das Gespann (1) eine landwirtschaftliche Zugmaschine (2), insbesondere einen Traktor (3), und eine an die Zugmaschine (2) adaptierte landwirtschaftliche Ballenpresse (4) umfasst, wobei die Zugmaschine (2) und die Ballenpresse (4) jeweils mittels des Assistenzsystems (12) ansteuerbare Arbeitsaggregate (7, 8) umfassen, wobei das Assistenzsystem (12) dazu vorgesehen und eingerichtet ist, einen Nutzer (11) bei der Einstellung des Gespanns (1) zur Durchführung eines Ballenpressvorgangs (5.1) auf einem Feld (6) zu unterstützen, **dadurch gekennzeichnet, dass** das Assistenzsystem (12) dazu vorgesehen und eingerichtet ist, zumindest einen Betriebsparameter (B_{M}) zumindest einer Maschinenanordnung (13) aus zumindest einem dem Ballenpressvorgang (5.1) vorgelagerten Prozessschritt (5) abzurufen, wobei das Assistenzsystem (12) dazu vorgesehen und eingerichtet ist, den zumindest einen Betriebsparameter (B_{M}) der zumindest einen Maschinenanordnung (13) in einer Analyseroutine derart zu verarbeiten, dass zumindest ein Betriebsparameter (B_{G}) für das Gespann (1) für die Durchführung des Ballenpressvorgangs (5.1) ermittelt wird, wobei das Assistenzsystem (12) dazu vorgesehen und eingerichtet ist, zumindest ein Arbeitsaggregat (7, 8) der Zugmaschine (2) und/oder der Ballenpresse (4) zur Einstellung des zumindest einen Betriebsparameters (B_{G}) für das Gespann (1) anzusteuern.

2. Assistenzsystem (12) nach Anspruch 2, **dadurch gekennzeichnet, dass** die Verarbeitung in der Analyseroutine auf einem Modell (17) basiert, mittels dessen anhand des zumindest einen Betriebsparameters (B_{M}) der Maschinenanordnung (13) zumindest ein Erntegutparameter (P_{E}) für während des Ballenpressvorgangs (5.1) zu verarbeitendes Erntegut (9) prognostiziert und anhand des zumindest einen Erntegutparameters (P_{E}) der zumindest eine Betriebsparameter (B_{G}) für das Gespann (1) ermittelt wird.

3. Assistenzsystem (12) nach Anspruch 1 oder 2, **dadurch gekennzeichnet, dass** der zumindest eine Betriebsparameter (B_{M}) der Maschinenanordnung (13) eine während der Durchführung des vorgelagerten Prozessschrittes (5) ermittelte Drehzahl eines Antriebsaggregats der Maschinenanordnung (13), ein von dem Antriebsaggregat der Maschinenanordnung (13) bereitgestelltes Drehmoment, eine von einem Arbeitsaggregat der Maschinenanordnung (13) bereitgestelltes Drehmoment, eine Fahrgeschwindigkeit der Maschinenanordnung (13), ein Durchsatz der Maschinenanordnung (13) und/oder ein Energieverbrauch der Maschinenanordnung (13) ist.

4. Assistenzsystem (12) nach einem der Ansprüche 1 bis 3, **dadurch gekennzeichnet, dass** der zumindest eine Betriebsparameter (B_{M}) der Maschinenanordnung (13) und der zumindest eine Betriebsparameter (B_{G}) für das Gespann (1) jeweils mit einer Georeferenz verknüpft sind.

5. Assistenzsystem (12) nach Anspruch 4, **dadurch gekennzeichnet, dass** das Assistenzsystem (12) dazu vorgesehen und eingerichtet ist, eine Position des Gespanns (1) auf dem Feld (6) während der Durchführung des Ballenpressvorgangs (5.1) zu bestimmen, die Position des Gespanns (1) auf dem Feld (6) mit der mit dem zumindest einen Betriebsparameter (B_{G}) für das Gespann (1) verknüpften Georeferenz zu vergleichen und bei einer Übereinstimmung der Position des Gespanns (1) mit der Georeferenz das zumindest eine Arbeitsaggregat (7, 8) der Zugmaschine (2) und/oder der Ballenpresse (4) zur Einstellung des zumindest einen Betriebsparameters (B_{G}) für das Gespann (1) anzusteuern.

6. Assistenzsystem (12) nach einem der Ansprüche 1 bis 5, **dadurch gekennzeichnet, dass** der zumindest eine dem Ballenpressvorgang (5.1) vorgelagerte Prozessschritt (5) ein Prozessschritt "Ernten" (5.2), ein Prozessschritt "Mähen" (5.3), ein Prozessschritt "Wenden" (5.4) und/oder ein Prozessschritt "Schwaden" (5.5) ist, wobei eine bei dem Prozessschritt "Ernten" (5.2) verwendete Maschinenanordnung (13) ein Mähdrescher, eine bei dem Prozessschritt "Mähen" (5.3) verwendete Maschinenanordnung (13) ein landwirtschaftliches Gespann aus einer Zugmaschine und mindestens einem daran adaptierten Mähwerk, eine bei dem Prozessschritt "Wenden" (5.4) verwendete Maschinenanordnung (13) ein landwirtschaftliches Gespann aus einer Zugmaschine und einem daran adaptierten Wender und eine bei dem Prozessschritt "Schwaden" (5.5) verwendete Maschinenanordnung (13) ein landwirtschaftliches Gespann aus einer Zugmaschine und mindestens einem daran adaptierten Schwader ist.

7. Assistenzsystem (12) nach einem der Ansprüche 1 bis 6, **dadurch gekennzeichnet, dass** der zumindest eine dem Ballenpressvorgang (5.1) vorgelagerte Prozessschritt (5) und der Ballenpressvorgang (5.1) Prozessschritte (5) eines zusammenhängenden Ernteprozesses sind oder der zumindest eine dem Ballenpressvorgang (5.1) vorgelagerte Prozessschritt (5) und der Ballenpressvorgang (5.1) Prozessschritte (5) unterschiedlicher Ernteprozesse sind.

8. Assistenzsystem (12) nach einem der Ansprüche 1 bis 7, **dadurch gekennzeichnet, dass** der zumindest eine Betriebsparameter (B_{G}) für das Gespann (1) eine mittels eines Antriebsaggregats (7.1) der Zugmaschine (2) einstellbare Fahrgeschwindigkeit des Gespanns (1), ein mittels eines Lenksystems (7.4) der Zugmaschine (2) einstellbarer Lenkwinkel der Zugmaschine (2), eine Ausrichtung der Ballenpresse (4) relativ zur Zugmaschine (2), eine Drehzahl einer Zapfwelle (7.5) der Zugmaschine (2), ein mittels eines Hydrauliksystems (7.6) der Zugmaschine (2) bereitgestellter hydraulischer Druck, ein Reifendruck zumindest eines Bodeneingriffsmittels (7.3) der Zugmaschine (2), ein Drehmoment und/oder eine Drehgeschwindigkeit einer Pick-up (8.1) der Ballenpresse (4), ein Drehmoment und/oder eine Drehgeschwindigkeit eines Rotors (8.2) der Ballenpresse (4), ein Zeitpunkt zur Aktivierung oder Deaktivierung von Schneidmessern (8.3) der Ballenpresse (4), eine Drehzahl und/oder Anzahl von Hüben eines Raffers (8.4) der Ballenpresse (4), ein in einer Presskammer (8.5) der Ballenpresse (4) aufgebrachter Pressdruck, ein Zeitpunkt zur Aktivierung oder Deaktivierung einer Knotereinrichtung (8.6) der Ballenpresse (4) und/oder ein Zeitpunkt zur Ablage eines Ballens ist.

9. Assistenzsystem (12) nach einem der Ansprüche 1 bis 8, **dadurch gekennzeichnet, dass** das Assistenzsystem (12) dazu vorgesehen und eingerichtet ist, zumindest einen Betriebsparametersatz (B_{MS}) der zumindest einen Maschinenanordnung (13) aus dem zumindest einen dem Ballenpressvorgang (5.1) vorgelagerten Prozessschritt (5) abzurufen, wobei das Assistenzsystem (12) dazu vorgesehen und eingerichtet ist, den zumindest einen Betriebsparametersatz (B_{MS}) der zumindest einen Maschinenanordnung (13) in der Analyseroutine derart zu verarbeiten, dass zumindest ein Betriebsparametersatz (BGs) für das Gespann (1) für die Durchführung des Ballenpressvorgangs (5.1) ermittelt wird, wobei das Assistenzsystem (12) dazu vorgesehen und eingerichtet ist, das zumindest eine Arbeitsaggregat (7, 8) der Zugmaschine (2) und/oder der Ballenpresse (4) zur Einstellung des zumindest einen Betriebsparametersatzes (B_{GS}) für das Gespann (1) anzusteuern.

10. Assistenzsystem (12) nach einem der Ansprüche 1 bis 9, **dadurch gekennzeichnet, dass** das Assistenzsystem (12) dazu vorgesehen und eingerichtet ist, in einer Speichereinrichtung hinterlegte Referenzdaten (R) abzurufen, wobei das Assistenzsystem (12) dazu vorgesehen und eingerichtet ist, den zumindest einen Betriebsparameter (B_{G}) für das Gespann (1) in der Analyseroutine unter Berücksichtigung der Referenzdaten (R) zu ermitteln, wobei die Referenzdaten (R) vorzugsweise Wetterdaten und/oder agronomische Daten, insbesondere Bodendaten, Bestandsdaten, Ertragsdaten und/oder Flächendaten, umfassen.

11. Assistenzsystem (12) nach Anspruch 10, **dadurch gekennzeichnet, dass** das Assistenzsystem (12) dazu vorgesehen und eingerichtet ist, aktualisierte Referenzdaten (R) während des Ballenpressvorgangs (5.1) abzurufen und den zumindest einen Betriebsparameter (B_{G}) für das Gespann (1) unter Berücksichtigung der aktualisierten Referenzdaten (R) während der Durchführung des Ballenpressvorgangs (5.1) anzupassen.

12. Assistenzsystem (12) nach einem der Ansprüche 1 bis 11, **dadurch gekennzeichnet, dass** das Assistenzsystem (12) dazu vorgesehen und eingerichtet ist, das zumindest eine Arbeitsaggregat (7, 8) der Zugmaschine (2) und/oder der Ballenpresse (4) zur Einstellung des zumindest einen Betriebsparameters (B_{G}) für das Gespann (1) automatisch anzusteuern.

13. Assistenzsystem (12) nach einem der Ansprüche 1 bis 12, **dadurch gekennzeichnet, dass** das Assistenzsystem (12) mit einer Anzeigeeinrichtung (15) sowie einer Ein- und Ausgabeeinheit (16) zur Übertragung von Daten verbunden ist, wobei das Assistenzsystem (12) dazu vorgesehen und eingerichtet ist, dem Nutzer (11) den zumindest einen Betriebsparameter (B_{G}) für das Gespann (1) mittels der Anzeigeeinrichtung (15) zur Freigabe, Ablehnung und/oder Anpassung desselben über die Ein- und Ausgabeeinheit (16) anzuzeigen.

14. Assistenzsystem (12) nach einem der Ansprüche 1 bis 13, **dadurch gekennzeichnet, dass** das Assistenzsystem (12) dazu vorgesehen und eingerichtet ist, zum Abrufen des zumindest einen Betriebsparameters (B_{M}) der zumindest einen Maschinenanordnung (13) unmittelbar auf die zumindest eine Maschinenanordnung (13) und/oder auf eine Speichereinrichtung (14), in welcher der zumindest eine Betriebsparameter (B_{M}) der zumindest einen Maschinenanordnung (13) hinterlegt ist, zuzugreifen.

15. Assistenzsystem (12) nach einem der Ansprüche 1 bis 14, **dadurch gekennzeichnet, dass** das Assistenzsystem (12) dazu vorgesehen und eingerichtet ist, den zumindest einen Betriebsparameter (B_{G}) für das Gespann (1) an weitere landwirtschaftliche Gespanne (1) einer Flotte von landwirtschaftlichen Gespannen (1) zu übermitteln, wobei jedes Gespann (1) der Flotte eine Zugmaschine (2) und eine an die Zugmaschine (2) adaptierte landwirtschaftliche Ballenpresse (4) umfasst.

16. Landwirtschaftliches Gespann (1) umfassend eine landwirtschaftliche Zugmaschine (2), insbesondere einen Traktor (3), und eine an die Zugmaschine (2) adaptierte landwirtschaftliche Ballenpresse (4) sowie ein Assistenzsystem (12), **dadurch gekennzeichnet, dass** das Assistenzsystem (12) nach einem der Ansprüche 1 bis 15 ausgebildet ist.
